# EUROPÄISCHE PATENTSCHRIFT

(11) **EP 2 333 013 B1**
(45) Veröffentlichungstag und Bekanntmachung des Hinweises auf die Patenterteilung: **04.07.2012**
(21) Anmeldenummer: 10194412.2
(22) Anmeldetag: 09.12.2010
(51) Int. Cl.: C08L 69/00

(54) **Polycarbonatblends mit hoher Wärmeformbeständigkeit und verbesserten Oberflächeneigenschaften**
Polycarbonate blends with high thermoforming resistance and improved surface characteristics
Obturateurs de polycarbonates dotés d'une grande résistance à la chaleur et de propriétés de surface améliorées

(30) Priorität: 12.12.2009 DE 102009058099
(43) Veröffentlichungstag der Anmeldung: 15.06.2011
(73) Patentinhaber: Bayer MaterialScience AG, 51368 Leverkusen (DE)
(72) Erfinder: Meyer, Alexander, 40489, Düsseldorf (DE); Erkelenz, Michael, 47239, Duisburg (DE); Oser, Rafael, 47800, Krefeld (DE); Karbach, Alexander, 47800, Krefeld (DE)

(56) Entgegenhaltungen:
- DE-A1- 4 009 759
- DE-A1-102005 019 983

## Beschreibung

Die vorliegende Erfindung betrifft Zusammensetzungen enthaltend Copolycarbonate umfassend Bisphenol A und TMC-Bisphenol-Bausteine und spezielle Polyolefine bzw. funktionalisierte Polyolefine. Zudem betrifft die Erfindung Formkörper bzw. Spritzgussteile und Extrudate erhältlich aus diesen Zusammensetzungen, sowie Verfahren zur Herstellung der Formkörper und Extrudate. Desweiteren betrifft die Erfindung mehrschichtige Erzeugnisse umfassend ein Substrat enthaltend das erfindungsgemäße Polycarbonat, die mindestens auf einer Seite wenigstens eine weitere Schicht aufweist, bevorzugt eine Metallschicht, sowie Herfahren zur Herstellung solcher Erzeugnisse.

Polycarbonate werden aufgrund ihrer hohen Wärmeformbeständigkeit u. a. in Bereichen eingesetzt, in denen mit einer erhöhten Temperaturbelastung zu rechnen ist. Mit speziellen Copolycarbonaten (wie z.B. bei einem Copolycarbonat basierend auf Bisphenol A und Bisphenol TMC (1,1-Bis-(4-hydroxyphenyl)-3,3,5-trimethylcyclohexan)) gelingt es, die Wärmeformbeständigkeit weiter zu erhöhen. Diese Polycarbonate eignen sich daher auch zur Herstellung von Linsen, Reflektoren, Lampenabdeckungen und -gehäusen etc., die einer höheren Temperaturbelastung ausgesetzt sind.

Neben einer guten Verarbeitbarkeit und guten mechanischen Eigenschaften müssen diese Materialien auch weiteren Anforderungen wie einer guten Oberflächenqualität im resultierenden Spritzgussteil /Extrudat sowie einer guten Metallhaftung genügen.

Je nach eingesetzten Bisphenolen und geeigneter Einstellung des Molekulargewichts der Homo- und Copolycarbonate lassen sich die Wärmeformbeständigkeit und die mechanischen Eigenschaften in einem weiten Bereich variieren. Jedoch besteht für bestimmte Anwendungen nach wie vor der Bedarf einer weiter verbesserten Metallhaftung. So ist gerade im Bereich von Reflektoren eine gute Metallhaftung unabdingbar.

Eine Plasmavorbehandlung kann u. U. die Oberflächeneigenschaften von Polymeren verändern. Diese Methoden sind z.B. bei Friedrich et al. in Metallized plastics 5&6: Fundamental and applied aspects und H. Grünwald et al. In Surface and Coatings Technologiy 111 (1999) 287-296 beschrieben. Eine Oberflächenbehandlung von Kunststoffen bedeutet jedoch einen erhöhten technischen Mehraufwand und kann ggf. zur Schädigung der Kunststoffoberfläche führen.

Der Auftrag von Metallen auf das Polymer kann über verschiedene Methoden wie z.B. durch Aufdampfen oder Sputtern geschehen. Die Verfahren sind näher beschrieben z.B. in "Vakuumbeschichtung Bd.1 bis 5", H. Frey, VDI-Verlag Düsseldorf 1995 oder "Oberflächen- und Dünnschicht-Technologie" Teil 1, R.A. Haefer, Springer Verlag 1987.

Polycarbonate aus Bisphenol A und TMC Bisphenol sind unter dem Handelsnamen Apec® von BayerMaterialscience AG kommerziell erhältlich.

Im Stand der Technik sind Zusammensetzungen mit hochwärmeformbeständigen Polyolefinen in DE 40 09 759A1 beschrieben. Diese Erfindung betrifft allerdings keine Zusammensetzungen, die eine verbesserte Metallhaftung aufweisen. Die verbesserte Metallhaftung kann nur durch eine Kombination von bestimmten Polyolefinen und bestimmten Polycarbonaten erzielt werden.

In EP 362 646 A2 sind Zusammensetzungen von hochwärmeformbeständigen Polycarbonate mit Elastomeren beschrieben. Der Fachmann kann aus dieser Anmeldung jedoch nicht erkennen, welche Zusammensetzungen, insbesondere welche speziellen Polyolefine, zu einer verbesserten Metallhaftung führt.

In EP 385 086 A2 sind Mischungen von hochwärmeformbeständigen Polycarbonat mit Polyethylenterephthalaten beschrieben. Dagegen betrifft die vorleigende Anmeldung andere Zusammensetzungen.

In EP 415 066 A2 sind Mischungen von hochwärmeformbeständigen Polycarbonat mit Polyurethanen und Vinylpolymeren beschrieben. Die vorliegende Anmeldung betrifft jedoch Zusammensetzungen anderer Natur.

In EP 722 984 A2 sind Mischungen von hochwärmeformbeständigen Polycarbonat mit Acrylaten sowie Epoxy-funktionalisierten Komponenten beschrieben. Diese verbessern die Oberflächeneigenschaften insbesondere bezüglich einer verbesserten Metallhaftung jedoch nicht.

Ausgehend vom Stand der Technik stellte sich somit die Aufgabe, Zusammensetzungen aus Polycarbonaten, die eine hohe Wärmeformbeständigkeit aufweisen, zu entwickeln, welche eine intrinsisch verbesserte Haftung zu Metallen aufweisen, so dass eine Vorbehandlung nicht zwingend nötig ist.

Es wurde nun gefunden, dass Zusammensetzungen enthaltend Copolycarbonate aus Bisphenol A und TMC-Bisphenol sowie spezielle Polyolefine oder Polyolefinderivate, insbesondere funktionalisierte Polyolefine oder polyolefinische Blockcopolymere, eine verbesserte Metallhaftung aufweisen. Dies ist insbesondere deshalb überraschend, da bekanntermaßen Polyolefine aufgrund ihres ausgeprägten hydrophoben Charakters eine schlechte Haftung zu Metallen aufweisen. Es war nicht zu erwarten, dass Polyolefine oder Polyolefinderivate die Oberflächeneigenschaften der genannten Polycarbonaten hinsichtlich der Metallhaftung verbessern. Auch die eingesetzten funktionalisierten Polyolefine oder polyolefinischen Blockcopolymere verbessern überraschenderweise die Metallhaftung, obwohl der Funktionalisierungsgrad sehr gering ist (1- 2 Gew.-% bezogen auf eingesetztes Polyolfin bzw. Polyolefinderivat).

Weiterhin wurde überraschenderweise gefunden, das nicht alle Polyolefine die Oberflächeneigenschaften verbessern, sondern nur einige spezielle Polyolefine. So verbessern andere funktionalisierte Polyolefine die Metallhaftung nicht. Beispiele für polyolefinartige und/oder Maleinsäureanhydrid-funktionalisierte und/oder polare Verbindungen, welche die Metallhaftung nicht verbessern bzw. nicht ausreichend mit hochwärmeformbeständigen Polycarbonat kompatibel sind, sind z.B. Maleinsäure-anhydrid-funktionalisiertes Acrylnitril-butadien Styrol, ABS-basierende Polymere allgemein, Maleinsäureanhydrid-funktionalisiertes Polystyrol, Polystyrol-Maleinsäureanhydrid-Copolymere Maleinsäureanhydrid-funktionalisertes Polyethylen, Polyisobutylen-alt-maleinimid)-co-(isobutylen-alt-maleinsäureanhydrid), Poly(isobutylen-alt-maleinsäureanhydrid), Polysulfone, Polyethersulfone, Polyimide, Polyisobutylen-alt-maleinsäureanhydrid, Polymaleinsäureanhydid-altoctadecen. Daher war es sehr überraschend, dass ähnliche Materialien olefinischer Natur die Metallhaftung drastisch verbessern.

Aufgabe der vorliegenden Erfindung ist es, Copolycarbonatblends mit verbesserten Oberflächeneigenschaften, insbesondere einer verbesserten Metallhaftung, zu entwickeln sowie ein Verfahren zur Herstellung dieser speziellen Copolycarbonatblends zu erarbeiten, das zu Materialien bzw. Spritzgusskörpern.

Gegenstand der vorliegenden Erfindung sind daher Zusammensetzungen enthaltend
A) 82 - 99,5 Gew.-Teile, bevorzugt 85 - 99 Gew.-Teile, besonders bevorzugt 90 - 99 Gew.-Teile (jeweils bezogen auf die Summe der Gewichtsteile der Komponenten A+B, wobei die Komponente B eine oder mehrere der Komponenten B2 und / oder B3 bezeichnet) hochwärmeformbeständiges Polycarbonat auf Basis von einem oder mehreren cycloaliphatischen Bisphenolen der Formel 1, 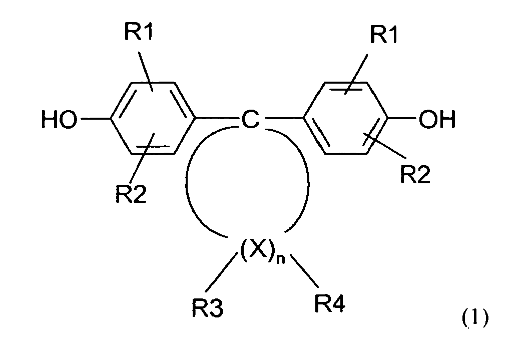 worin
   R1 und R2 unabhängig voneinander Wasserstoff Halogen, bevorzugt Chlor oder Brom, C1-C8-alkyl, C5-C6 -cycloalkyl, Phenyl, C7-C12 Aralkyl, insbesondere für Methyl, Phenyl oder H und insbesondere für H bedeuten,
   n eine ganze Zahl von 4 - 7, bevorzugt 4 oder 5 ist,
   R3 und R4 für jedes X individuell wählbar sind und unabhängig voneinander Wasserstoff oder C1-C6-Alkyl bedeuten und
   X Kohlenstoff bedeutet,
   mit der Maßgabe, dass an mindestens einem Atom X R3 und R4 gleichzeitig Alkyl, bevorzugt Methyl bedeuteten;
   insbesondere bevorzugt sind Copolycarbonate aus Bisphenol A und Bisphenol TMC,
   und
B) 0,5-18 Gew.-Teile, bevorzugt 1- 15 Gew.-Teile, insbesondere bevorzugt 1 - 10 Gew.-Teile (jeweils bezogen auf die Summe der Gewichtsteile der Komponenten A+B, wobei die Komponente B eine oder mehrere der Komponenten B2 und / oder B3 bezeichnet) einer oder mehrerer Polyolefine und / oder Polyolefinderivate ausgewählt aus:
   B2) Blockcopolymer auf Basis von Vinylaromaten (A-Blöcke), und solchen überwiegend gebildet durch Polymerisation von 1,3 Dienen (B-Blöcke),
      wobei diese Blockcopolymere zumindest zum Teil mit Säureanhydridgruppen funktionalisiert sein können,
   B3) Alkylencopolymere.
C) gegebenenfalls 0 bis 5 Gew.-Teile, bevorzugt 0 bis 2 Gew.-Teile, besonders bevorzugt 0 bis 1 Gew.-Teile (jeweils bezogen auf die Summe der Gewichtsteile der Komponenten A+B) Zusatzstoffe.
wobei alle Gewichtsteilangaben in der vorliegenden Anmeldung so normiert sind, dass die Summe der Gewichtsteile der Komponenten A+B in der Zusammensetzung 100 ergeben,
die oben genannte technische Aufgabe lösen.

Solche Zusammensetzungen lassen sich in diversen Anwendungen vorteilhaft einsetzen. Hierzu zählen beispielsweise Anwendungen im Elektro-/Elektronikbereich wie zum Beispiel Lampengehäuse, Bezels oder Reflektoren. Darüber können die erfindungsgemäßen Zusammensetzungen in Form von Folien oder Platten verwendet werden. Generell sind diese Zusammensetzungen in Anwendungen vorteilhaft bei welchen hohe Temperaturbeständigkeit und gute Metallhaftung notwendig sind.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar.

Die in der erfindungsgemäßen Zusammensetzung verwendeten (Co)polycarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbonat-Eichung).

Sie haben in diesem Rahmen weiterhin bevorzugt mittlere Molekulargewichte M̅_{w} von 16 000 bis 40 000 g/mol.

Die hochwärmeformbeständigen Polycarbonate der Komponente A) können auch aus Mischungen von Bisphenolen der Formel (1) und 2,2-Bis-(4-hydroxyphenyl)propan (Bisphenol A) und / oder anderer bekannter Bisphenole, wie z.B. 4,4'-Dihydroxydiphenyl, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2 , 2-Bis-(3,5-dibrom-4-hydroxyphenyl)-propan und 1,1-Bis-(4-hydroxyphenyl)-cyclohexan hergestellt werden. Vorzugsweise werden Mischungen mit 0 - 80 Mol-% Bisphenol A insbesondere 0 - 70 Mol-% Bisphenol A eingesetzt. Der sich zu 100 Mol-% addierende Rest stellt die Bisphenole der Formel (1) dar. Die Diphenole können sowohl allein als auch im Gemisch miteinander verwendet werden; es sind sowohl Homopolycarbonate als auch Copolycarbonate einbezogen. Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Die Herstellung der erfindungsgemäßen Polycarbonate ist weiterhin auch aus Diarylcarbonaten und Diphenolen nach dem bekannten Polycarbonatverfahren in der Schmelze, dem sogenannten Schmelzumesterungsverfahren, möglich, das z. B. in WO-A 01/05866 und WO-A 01/05867 beschrieben ist. Daneben werden Umesterungsverfahren (Acetatverfahren und Phenylesterverfahren) beispielsweise in den US-A 3,494,885, US-A 4,386,186, US-A 4,661,580, US-A 4,680,371 und US-A 4,680,372, in den EP-A 26 120, EP-A 26 121, EP-A 26 684, EP-A 28 030, EP-A 39 845, EP-A 39 845, EP-A 91 602, EP-A 97 970, EP-A 79 075, EP-A 146 887, EP-A 156 103, EP-A 234 913 und EP-A 240 301 sowie in den DE-A 14 95 626 und DE-A 22 32 977 beschrieben.

Diarylcarbonate sind solche Kohlensäurediester der Formel (2) 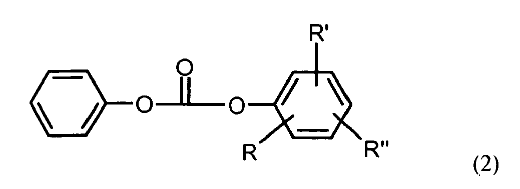 und Formel (VII), 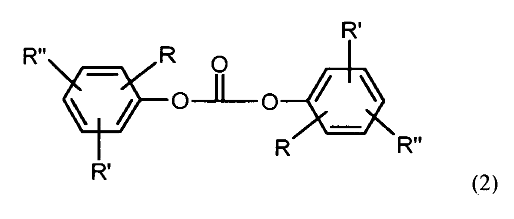 wobei R, R' und R" unabhängig voneinander H, gegebenenfalls verzweigte C1-C34-Alkyl/Cycloalkyl, C7-C34-Alkaryl oder C6-C34-Aryl bzw. C6-C34-Aryl-oxy darstellen können, beispielsweise Diphenylcarbonat, Butylphenyl-phenylcarbonat, Di-butylphenylcarbonat, Isobutylphenyl-phenylcarbonat, Di-isobutylphenylcarbonat, tert-Butylphenyl-phenylcarbonat, Di-tert-butylphenylcarbonat, n-Pentylphenyl-phenylcarbonat, Di-(n-pentylphenyl)carbonat, n-Hexylphenyl-phenylcarbonat, Di-(n-hexylphenyl)carbonat, Cyclohexylphenyl-phenylcarbonat, Di-cyclohexylphenylcarbonat, Phenylphenol-phenylcarbonat, D i-phenylphenolcarbonat, Isooctylphenyl-phenylcarbonat, Di-isooctylphenylcarbonat, n-Nonylphenyl-phenylcarbonat, Di-(n-nonylphenyl)carbonat, Cumylphenyl-phenylcarbonat, Di-cumylphenylcarbonat, Naphthylphenyl-phenylcarbonat, Di-naphthylphenylcarbonat, Di-tert-butylphenyl-phenylcarbonat, Di-(di-tert-butylphenyl)carbonat, Dicumylphenyl-phenylcarbonat, Di-(dicumylphenyl)carbonat, 4-Phenoxyphenyl-phenylcarbonat, Di-(4-phenoxyphenyl)carbonat, 3-Pentadecylphenyl-phenylcarbonat, Di-(3-pentadecylphenyl)carbonat, Tritylphenyl-phenylcarbonat, Di-tritylphenylcarbonat, bevorzugt Diphenylcarbonat, tert-Butylphenyl-phenylcarbonat, Di-tert-butylphenylcarbonat, Phenylphenol-phenylcarbonat, Diphenylphenolcarbonat, Cumylphenyl-phenylcarbonat, Di-cumylphenylcarbonat, besonders bevorzugt Diphenylcarbonat.

Einige der verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan,

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Im Falle des Phasengrenzflächenpolykondensationsverfahrens werden zur Regelung des Molekulargewichtes monofunktionellen Kettenabbrecher, wie Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern benötigt. Diese werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

Diphenole zur Herstellung der erfindungsgemäßen Polycarbonate bzw. Copolycarbonate können auch Polymerisate oder Kondensate mit phenolischen Endgruppen sein, so dass erfindungsgemäß auch Polycarbonate bzw. Copolycarbonate mit Blockstrukturen einbezogen sind.

Beispiele für hochwärmeformbeständige Copolycarbonate der Komponente A sind bekannt unter dem Namen Apec® der Firma Bayer Materialscience.

### Komponente B

Die Komponente B umfasst eine oder mehrere der folgenden Komponenten:
B2) Blockcopolymer auf Basis von Vinylaromaten (A-Blöcke), bevorzugt Styrol, und solchen überwiegend gebildet durch Polymerisation von 1,3 Dienen (B-Blöcke), bevorzugt Butylen, Isobutylen, Etyhlen-butylen-copolymerblöcken, Ethylen-propylencoblöcken oder Isopren-Einheiten. Sowohl Homo- als auch Copolymerblöcke sind erfindungsgemäß nutzbar. Resultierende Blockcopolymere können gleich oder unterschiedliche B-Blöcke enthalten, die zum größten Teil oder vollständig hydriert sein müssen. Blockcopolymere können eine lineare A-B-A Struktur aufweisen. Einsetzbar sind ebenfalls Blockcopolymere von radialer Gestalt sowie sternförmige und lineare Multiblockcopolymere. Ebenso eingeschlossen sind A-B-Zweiblockcopolymere. Sämtliche vorgenannten Polymere können alleine oder im Gemisch eingesetzt werden; bevorzugt sind Styrol-Ethylen/Butylen-Styrol-Triblockcopolymere, Styrol-Etylen/Propylen-Diblockcopolymere, Styrol-Ethylen/Butylen-Diblockcopolymere,
   und/oder
   Blockcopolymere der Komponente B2) wobei zumindest ein Teil der Blöcke bevorzugt der Kautschukblock mit Säureanhydridgruppen funktionalisiert ist, bevorzugt mit Maleinsäureanhydrid Resten funktionalisiert ist. Bevorzugt liegt der Anteil des Säureanhydrids zwischen 0,2 und 4 Gew.-% bezogen auf das gesamte Blockcopolymer. Insbesondere bevorzugt liegt der Anteil des Säureanhydrids zwischen 0,5 und 3 Gew.-% bezogen auf das gesamte Blockcopolymer,
B3) Alkylencopolymere wie z.B. Ethylen/Propylen-Kautschuk oder Ethylen-octen-Copolymeren, in einer besonderen Ausführungsform funktionalisiert mit Maleinsäureanhydrid. Bevorzugt liegt der Funktionalisierungsgrad bei 1- 4 %.

Beispiele für kommerziell erhältliche Materialien der Komponenten B2 und B3 sind
- Maleinsäureanhydrid-funktionalisierte Ethylencopolymere wie z.B. Exxelor® VA 1801, Exxelor® VA 1803 und Exxelor® VA 1840 der Firma ExxonMobil Chemical
- Lineare funktionalisierte Triblock-copolymere basierend auf Styrol und Ethylen/Butylen wie Kraton® FG 1901X und Kraton® FG1924X der Firma Kraton Polymers
- Lineare Triblockcopolymere wie Kraton® G1651 und Kraton® G1652 der Firma Kraton Polymers
- Polyolefin Elastomer basierend auf Ethylen-octen Copolymeren wie Engage® 8411, Engage® 8440 Engage® 8842 der Firma Dow Chemical

Die erfindungsgemäßen Polycarbonate Zusammensetzungen können in bekannter Weise aufgearbeitet und zu beliebigen Formkörpern verarbeitet werden, beispielsweise durch Extrusion oder Spritzguss.

Den erfindungsgemäßen Zusammensetzungen können noch andere aromatische Polycarbonate und / oder andere aromatische Polyestercarbonate und/oder andere aromatische Polyester wie z.B. Polybutylenterephthalat in bekannter Weise zugemischt werden.

Die Herstellung der erfindungsgemäßen Zusammensetzungen enthaltend Polycarbonat und Komponenten B2 und / oder B3 erfolgt mit gängigen Einarbeitungsverfahren und kann beispielsweise durch Vermischen von Lösungen des Copolycarbonats mit einer Lösung der Komponenten B2 und/oder B3 in geeigneten Lösungsmitteln wie Dichlormethan, Halogenalkanen, Halogenaromaten, Toluol, Chlorbenzol und Xylolen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Zusammensetzungen können in bekannter Weise aufgearbeitet und zu beliebigen Formkörpern verarbeitet werden, beispielsweise durch Extrusion, Coextrusion, Spritzguss oder Extrusionsblasformen.

### Komponente C

Den erfindungsgemäßen Zusammensetzungen können noch die für diese Thermoplasten üblichen Additive wie Füllstoffe, UV-Stabilisatoren, IR-Stabilisatoren, Thermostabilisatoren, Antistatika und Pigmente, Farbmittel in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw substituierte Hydroxyalkoxyphenyl, 1,3,5-triazole , bevorzugt sind substituierte Benzotriazole wie z.B. 2-(2'-hydroxy-5'-methyl-phenyl)-benzotriazole, 2-(2'-hydroxy-3',5'-di-t-butyl-phenyl)benzotriazole, 2-(2'-hydroxy-3'-tert.-butyl-5'-methyl-phenyl)-5-chlorobenzotriazole, 2-(2'-hydroxy-3',5'-tert.-butyl-phenyl)-5-chloro-benzotriazole, 2-(2'-hydroxy-5'-tert.-octylphenyl)benzotriazole, 2-(2'-hydroxy-3',5'-di-tert.-amylphenyl)benzotriazole, 2-[2'-hydroxy-3'-(3",4",5",6"-tetrahydrophthalimido-ethyl)-5'-methylphenyl]-benzotriazole and 2,2'-methylenebis [4-(1,1,3,3-tetramethylbutyl)-6-(2H-benzotriazole-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch vorzugsweise in einer Menge von 0,01 bis 1 Gew.-%, bezogen auf die Masse der Zusammensetzung eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die erfindungsgemäßen Polycarbonate und Copolycarbonate gegebenenfalls in Abmischung mit anderen Thermoplasten und/oder üblichen Additiven können zu beliebigen Formkörpern/Extrudaten verarbeitet überall dort eingesetzt werden, wo bereits bekannte Polycarbonate und Copolycarbonate eingesetzt werden. Aufgrund ihres Eigenschaftsprofils eignen sie sich als Substratmaterialien für Platten, Stegplatten, Verglasungen, Streuscheiben, Lampenabdeckungen oder optische Datenspeicher, wie Audio-CD, CD-R(W), DVD, DVD-R(W) etc., sind aber auch beispielsweise als Folien im Elektrosektor als Formteile im Fahrzeugbau und als Platten für Abdeckungen im Sicherheitsbereich einsetzbar. Weitere mögliche Anwendungen der erfindungsgemäßen Polycarbonate sind:
Sicherheitsscheiben, die bekanntlich in vielen Bereichen von Gebäuden, Fahrzeugen und Flugzeugen erforderlich sind, sowie als Schilde von Helmen.
Herstellung von Folien, insbesondere Skifolien.
Herstellung von Blaskörpern (siehe beispielsweise US-Patent 2 964 794), beispielsweise 1 bis 5 Gallon Wasserflaschen.
Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
Herstellung optischer Datenspeicher.
Zur Herstellung von Ampelgehäusen oder Verkehrsschildem.
Zur Herstellung von Schaumstoffen (siehe beispielsweise DE-B 1 031 507).
Zur Herstellung von Fäden und Drähten (siehe beispielsweise DE-B 1 137 167 und DE-A 1 785 137).
Als transluzente Kunststoffe mit einem Gehalt an Glasfasern für lichttechnische Zwecke (siehe beispielsweise DE-A 1 554 020).
Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreuenden Formteilen.
Zur Herstellung von Präzisionsspritzgußteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS2, bezogen auf Gesamtgewicht, enthalten.
Zur Herstellung optischer Geräteteile, insbesondere Linsen für Foto- und Filmkameras (siehe beispielsweise DE-A 2 701 173).
Als Lichtübertragungsträger, insbesondere als Lichtleiterkabel (siehe beispielsweise EP-A 0 089 801).
Als Elektroisolierstoffe für elektrische Leiter und für Steckergehäuse sowie Steckverbinder.
Herstellung von Mobiltelefongehäusen mit verbesserter Beständigkeit gegenüber Parfüm, Rasierwasser und Hautschweiß.
Network interface devices
Als Trägermaterial für organische Fotoleiter.
Zur Herstellung von Leuchten, z. B. Scheinwerferlampen, als sogenannte "head-lamps", Streulichtscheiben oder innere Linsen.
Für medizinische Anwendungen, z. B. Oxygenatoren, Dialysatoren.
Für Lebensmittelanwendungen, wie z. B. Flaschen, Geschirr und Schokoladenformen.
Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
Für Sportartikel, wie z. B. Slalomstangen oder Skischuhschnallen.
Für Haushaltsartikel, wie z. B. Küchenspülen und Briefkastengehäuse.
Für Gehäuse, wie z. B. Elektroverteilerschränke.
Gehäuse für Elektrozahnbürsten und Föngehäuse
Transparente Waschmaschinen - Bullaugen mit verbesserter Beständigkeit gegenüber der Waschlösung.
Schutzbrillen, optische Korrekturbrillen.
Lampenabdeckungen für Kücheneinrichtungen mit verbesserter Beständigkeit gegenüber Küchendunst insbesondere Öldämpfen.
Verpackungsfolien für Arzneimittel.
Chip-Boxen und Chip-Träger
Für sonstige Anwendungen, wie z. B. Stallmasttüren oder Tierkäfige.

Die Formkörper und Extrudate erhältlich aus den erfindungsgemäßen Polymeren sind ebenfalls Gegenstand dieser Anmeldung.

Ferner sind Spritzgusskörper bestehend aus dem erfindungsgemäßen Substratmaterial und einer Metallschicht, bevorzugt eine Aluminiumschicht, bevorzugt in einer Dicke von 20 - 500 nm insbesondere bevorzugt in einer Dicke von 40 - 300 nm Gegenstand der Erfindung.

Die Metallschicht wird beispielsweise mit Hilfe von Electro-Coating Deposition (ECD), Physical Vapor Deposition (PVD) oder Chemical Vapor Deposition (CVD) oder einer geeigneten Kombination dieser Verfahren auf den thermoplastischen Kunststoff aufgebracht. Verfahren zur Metallisierung von Polymerwerkstoffen sind in der Literatur bekannt.

In einer besonderen Ausführungsform ist auf der Metallschicht noch eine Schutzschicht, beispielsweise zum Korrosionsschutz aufgetragen. Die korrosionsmindernde Schutzschlicht kann in einem PECVD (*plasma enhanced chemical vapour deposition*) oder Plasmapolymerisationsprozess aufgebracht werden. Hierbei werden niedrigsiedende Precursoren haupsächlich auf siloxan Basis in ein Plasma verdampft und dadurch aktiviert, so dass sie einen Film bilden können. Typsiche Substanzen hierbei sind Hexamethyldisiloxan (HMDSO), Tetrametyldisiloxan, Decamethylcyclopentasiloxan, Octamethylcyclotetrasiloxan und Trimethoximethylsilan. Besonders bevorzugt ist HMDSO.

In einer weiteren besonderen Ausführungsform kann das Substrat vor der Metallisierung einer geeigneten Vorbehandlung unterzogen werden, wie z. B. eine Plasmavorbehandlung, mit dem Ziel, die Substratoberfläche zu aktivieren oder zu reinigen.

### Beispiele

### Compoundierung:

Die Einrichtung zur Compoundierung besteht aus:
- Dosiereinrichtung für die Komponenten
- Einem gleichlaufenden Zweiwellenkneter (ZSK 53 von der Firma Werner & Pfleiderer) mit einem Schneckendurchmesser von 53 mm
- Einer Lochdüse zur Ausformung von Schmelzesträngen
- Einem Wasserbad zur Abkühlung und dem Verfestigen der Stränge
- Einem Granulator.

Mit Hilfe der oben beschriebenen Compoundiereinrichtung wurden - soweit Zusammensetzungen betroffen sind - die unten genannten Mischungen hergestellt.

### Spritzguss

Zur Untersuchung der Metallisierungseigenschaften wurden Spritzguss-Rechteckplatten mit den Maßen 155 x 75 x 2,3 mm mit Mittalanguss oder 150 x 105 x 3,2 mm mit Seitenanguss angefertigt. Die Massetemperatur betrug 300 - 330 °C und die Werkzeugtemperatur 100 °C. Das jeweilige Granulat wurde vor Verarbeitung für 5 Stunden im Vakuumtrockenschrank bei 120 °C getrocknet.

Bestimmung des MVR: Die Schmelzvolumenfließrate (MVR) wird nach ISO 1133 bei einer Temperatur von 330 °C und einer Bleastung von 2,16 kg durchgeführt.

### Metallisierungsprozess:

Die Prüfkörper wurden, bevor sie in die Vakuumkammer eingebracht wurden, mit ionisierter Luft abgeblasen, um sie von Staub zu befreien. Danach wurde die Vakuumkammer mit den Prüfkörper auf einen Druck p ≤ 1 · 10⁻⁵ mbar evakuiert. Anschließend wurde Ar-Gas bis zu einem Druck von 5· 10⁻³ mbar eingelassen. Mittels DC-Magnetron wurde eine Aluminium-Schicht von 200 nm Dicke mit einer Leistungsdichte von 2,9 W/cm² auf die Proben aufgebracht. Die Proben befanden auf einem Probenteller, der sich während der Beschichtung mit 20 U/min drehte. Die Sputterzeit betrug 12,5 min.

### Metallhaftungstest:

Nach der Metallisierung wurden die Prüfkörper aus der Vakuumkammer entnommen und innerhalb einer Stunde mit Klebeband (Hersteller: 3M 853, Breite 19 mm) beklebt. Nach 24 Stunden wurde das Klebeband unter einem Abzugswinkel von 180° und einer Abzugsgeschwindigkeit von V=100mm/min mit Hilfe einer Zug-Dehnungs-Maschine (Instron 5566) abgezogen.

Ziel war es nun, die Aluminiumschicht rückstandsfrei vom Substrat abzuziehen, um eine quantitative Aussage über die Haftung des Aluminiums zum Substrat treffen zu können. Es wurde daher die Kraft bestimmt, die zum Abziehen des Klebebandes benötigt wird. Die Abzugskraft wurde auf die Breite des Klebebandes dividiert, um eine Abzugskraft unabhängig von der Breite des Klebebandes zu erhalten.

### Beispiel 1

### Herstellung des Polycarbonats (Komponente A) (60 mol-% TMC, 40 mol-% BPA)

Zu einer mit Stickstoff inertisierten Lösung von 1155 g (5,1 mol) Bisphenol A, 2344 g (7,6 mol) 1,1-Bis-(4-hydroxyphenyl)-3,3,5-trimethylcyclohexan und 2220 g (55,50 mol) Natriumhydroxid in 40 1 Wasser werden 40 l Methylenchlorid hinzugegeben. Bei einem pH-Wert von 12.5 - 13.5 und 20 °C leitet man 2495 g (25,2 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 60 g (0,6 mol) Phenol gelöst in einem Gemisch aus 1 1 Methylenchlorid hinzu und lässt 15 Minuten Rühren. Man rührt für weitere 15 Minuten und gibt 14,4 g (0.13 mol) N-Ethylpiperidin in 0,5 l Dichlormethan zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 310 °C und 138 Umdrehungen/min bei 0,2 mbar über einen Ausdampfextruder extrudiert und über einen Granulator granuliert. Man erhält eine transparentes farbloses Granulat. Das Molekulargewicht des Polycarbonatharzes beträgt Mw = 21300 g/mol (Massenmittel des Molekulargewichts bestimmt bei Raumtemperatur über Gelpermeationschromatographie kalibriert auf BPA-Polycarbonat mit Brechungsindexdetektor). Die Schmelze-Volumenfließrate gemessen bei 330 °C und 2,16 kg Gewicht liegt bei ca. MVR = 7 (nach ISO 1133).

### Beispiel 2

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 8 hergestellt analog zu Beispiel 1 wird mit 4 % Kraton® G1652 (linearer Triblockcopolymere auf Basis von Styrol und Ethylen/Butylen (SEBS) mit einem Styrol/Kautschuk Verhältnis von 30/70) der Firma Kraton Polymers über einen Compoundierextruder wie oben beschrieben versetzt und compoundiert. Man erhält ein opakes Granulat mit einer Melt-Flow-Rate von MVR = 7 (nach ISO 1133) und einer Vicat Temperatur von ca. 202 °C.

Über einen Spritzgussprozess wurden Rechteckplatten wie oben beschrieben hergestellt.

Der Metallhaftungstest ergab eine Abzugskraft von 7 mN/mm

### Beispiel 3

Ein Copolycarbonat enthaltend 64 mol-% BPA und 36 mol-% TMC-Bisphenol (1,1-Bis(4-hydroxyphenyl),3,5,5-trimethylcyclohexan) mit Phenol als Kettenabbrecher und einer Melt-Flow-Rate von MVR = 18 hergestellt analog zu Beispiel 1 (allerdings wird mit Mengenverhältnissen gearbeitet, die zu 64 mol-% BPA und 36 mol-% TMC-Bisphenol korrespondieren) wird mit 4 % Kraton® G 1652 der Firma Kraton Polymers über einen Compoundierextruder wie oben beschrieben versetzt und compoundiert. Man erhält ein opakes Granulat mit einer Melt-Flow-Rate von MVR = 20 (nach ISO 1133) und einer Vicat Temperatur von ca. 179 °C.

Über einen Spritzgussprozess wurden Rechteckplatten wie oben beschrieben hergestellt.

Der Metallhaftungstest ergab eine Abzugskraft von 8,9 mN/mm.

### Beispiel 4

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird mit 4 Gew.-% Exxelor® VA 1803 (amorphes Ethylen Copolymer mit Maleinsäureanhydrid funktionalisiert) der Firma Exxon Mobil Chemical über einen Compoundierextruder wie oben beschrieben versetzt und compoundiert. Man erhält ein opakes Granulat.

Über einen Spritzgussprozess wurden Rechteckplatten wie oben beschrieben hergestellt.

Der Metallhaftungstest ergab eine Abzugskraft von 6 mN/mm.

### Beispiel 5

Ein Copolycarbonat enthaltend 64 mol-% BPA und 36 mol-% TMC-Bisphenol (1,1-Bis(4-hydroxyphenyl),3,5,5-trimethylcyclohexan) mit Phenol als Kettenabbrecher und einer Melt-Flow-Rate von MVR = 18 (nach ISO 1133) hergestellt analog zu Beispiel 1 (allerdings wird mit Mengenverhältnissen gearbeitet, die zu 64 mol-% BPA und 36 mol-% TMC-Bisphenol korrespondieren) wird mit 3 Gew.-% Kraton® FG1901X der Firma Kraton Polymers (linearer Triblockcopolymere auf Basis von Styrol und Ethylen / Butylen mit einem Polystyrolanteil von 30%) über einen Compoundierextruder wie oben beschrieben versetzt und compoundiert. Man erhält ein opakes Granulat.

Über einen Spritzgussprozess wurden Rechteckplatten wie oben beschrieben hergestellt.

Der Metallhaftungstest ergab eine Abzugskraft von 8,1 mN/mm.

### Vergleichsbeispiel 6

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird ohne weitere Additive eingesetzt.

Über einen Spritzgussprozess wurden Rechteckplatten wie oben beschrieben hergestellt.

Der Metallhaftungstest ergab eine Abzugskraft von 4,9 mN/mm.

### Vergleichsbeispiel 7

Ein Copolycarbonat enthaltend 64 mol-% BPA und 36 mol-% TMC-Bisphenol (1,1-Bis(4-hydroxyphenyl),3,5,5-trimethylcyclohexan) mit Phenol als Kettenabbrecher und einer Melt-Flow-Rate von MVR = 18 (nach ISO 1133) hergestellt analog zu Beispiel 1 (allerdings wird mit Mengenverhältnissen gearbeitet, die zu 64 mol-% BPA und 36 mol-% TMC-Bisphenol korrespondieren) wird ohne weitere Additive eingesetzt.

Über einen Spritzgussprozess wurden Rechteckplatten wie oben beschrieben hergestellt.

Der Metallhaftungstest ergab eine Abzugskraft von 5 mN/mm.

### Vergleichsbeispiel 8

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird mit 4 Gew.-% Polystyrol/Maleinsäureanhydrid-Copolymer (Aldrich; Produkt-Nr.: 426946) über einen Compoundierextruder wie oben beschrieben versetzt und compoundiert. Man erhält ein opakes Granulat.

Über einen Spritzgussprozess wurden Rechteckplatten wie oben beschrieben hergestellt.

Der Metallhaftungstest ergab eine Abzugskraft von 5,0 mN/mm.

### Vergleichsbeispiel 9

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird mit 4 Gew.-% Poly(isobutylen-alt-maleimid)-co-(isobutylen-alt-maleinsäureanhydrid)-Polymer (Aldrich Nr. 531391) über einen Compoundierextruder wie oben beschrieben versetzt und compoundiert. Man erhält ein opakes Granulat.

Über einen Spritzgussprozess wurden Rechteckplatten wie oben beschrieben hergestellt.

Der Metallhaftungstest ergab eine Abzugskraft von 4,3 mN/mm.

### Vergleichsbeispiel 10

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird mit 4 Gew.-% Polyethylen gepropft mit Maleinsäureanhydrid (Aldrich; Produkt-Nr.: 531383) über einen Compoundierextruder wie oben beschrieben versetzt und compoundiert. Man erhält ein opakes Granulat.

Über einen Spritzgussprozess wurden Rechteckplatten wie oben beschrieben hergestellt.

Die Rechteckplatte zeigt eine blasenförmige Oberfläche, so dass ein Metallhaftungstest nicht möglich war. Wegen der geringen Oberflächenqualität ist dieses Material generell für eine Metallisierung ungeeignet.

### Vergleichsbeispiel 11

Ein Copolycarbonat enthaltend 40 mol-% BPA und 60 mol-% TMC-Bisphenol (1,1-Bis(4-hydroxyphenyl),3,5,5-trimethylcyclohexan) mit Phenol als Kettenabbrecher und einer Melt-Flow-Rate von MVR = 7 (nach ISO 1133) hergestellt analog zu Beispiel 1 wird mit 4 Gew.-% Polyethylen gepropft mit Maleinsäureanhydrid (Aldrich; Produkt-Nr.: 456624) über einen Compoundierextruder wie oben beschrieben versetzt und compoundiert. Man erhält ein opakes Granulat.

Über einen Spritzgussprozess wurden Rechteckplatten wie oben beschrieben hergestellt.

Die Rechteckplatte zeigt eine blasenförmige Oberfläche, so dass ein Metallhaftungstest nicht möglich war. Wegen der geringen Oberflächenqualität ist dieses Material generell für eine Metallisierung ungeeignet.

Es ist ersichtlich, dass die erfindungsgemäßen Zusammensetzungen hinsichtlich den Metallhaftungseigenschaften verglichen mit den Vergleichsbeispielen deutlich verbessert sind. So weisen die erfindungsgemäßen Zusammensetzungen deutlich höhere Haftungswerte verglichen mit den nicht erfindungsgemäßen Zusammensetzungen auf.

## Patentansprüche

1. Zusammensetzungen enthaltend
A) 82 - 99,5 Gew-Teile (bezogen auf die Summe der Gewichtsteile der Komponenten A+B, wobei die Komponente B eine oder mehrere der Komponenten ausgewählt aus B2 und B3 bezeichnet) hochwärmeformbeständiges Polycarbonat auf Basis von einem oder mehreren cycloaliphatischen Bisphenolen der Formel 1, 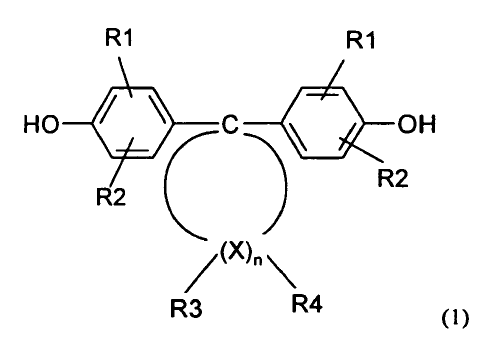 worin
R1 und R2 unabhängig voneinander Wasserstoff Halogen, C1-C8-alkyl, C5-C6 - cycloalkyl, Phenyl, C7-C12 Aralkyl,
n eine ganze Zahl von 4 - 7,
R3 und R4 für jedes X individuell wählbar sind und unabhängig voneinander Wasserstoff oder C1-C6-Alkyl bedeuten und
X Kohlenstoff bedeutet,
mit der Maßgabe, dass an mindestens einem Atom X R3 und R4 gleichzeitig Alkyl, bedeuteten;
und
B) 0,5-18 Gew.-Teile (bezogen auf die Summe der Gewichtsteile der Komponenten A+B, wobei die Komponente B eine oder mehrere der Komponenten B2 und/oder B3 bezeichnet) einer oder mehrerer Polyolefine und/oder Polyolefinderivate ausgewählt aus:
B2) Blockcopolymer auf Basis von Vinylaromaten (A-Blöcke), und solchen überwiegend gebildet durch Polymerisation von 1,3 Dienen (B-Blöcke),
wobei diese Blockcopolymere zumindest zum Teil mit Säureanhydridgruppen funktionalisiert sein können,
B3) Alkylencopolymere,
wobei alle Gewichtsteilangaben in der vorliegenden Anmeldung so normiert sind, dass die Summe der Gewichtsteile der Komponenten A+B in der Zusammensetzung 100 ergeben.

2. Zusammensetzung gemäß einem der Ansprüche 1 oder 2, enthaltend ein hochwärmeformbeständiges Polycarbonat gemäß Komponente A), worin R1 und R2 unabhängig voneinander Methyl, Phenyl oder H und insbesondere H bedeuten

3. Zusammensetzung gemäß einem der Ansprüche 1 bis 3, **dadurch gekennzeichnet, dass** das hochwärmeformbeständiges Polycarbonat gemäß Komponente A) ein Copolycarbonat aus Bisphenol A und Bisphenol TMC ist.

4. Zusammensetzung gemäß einem der Ansprüche 1 bis 3, enthaltend 0 bis 5 Gew.-Teile (bezogen auf die Summe der Gewichtsteile der Komponenten A+B = 100), Zusatzstoffe als Komponente C).

5. Zusammensetzung gemäß einem der Ansprüche 1 bis 4, **dadurch gekennzeichnet, dass** das Blockcopolymer gemäß Komponente B2) auf Basis von Vinylaromaten (A-Blöcke), und solchen überwiegend gebildet durch Polymerisation von 1,3 Dienen (B-Blöcke).

6. Zusammensetzung gemäß einem der Ansprüche 1 bis 5, **dadurch gekennzeichnet, dass** das Blockcopolymer gemäß Komponente B2) worin zumindest ein Teil der Blöcke mit Säureanhydridgruppen funktionalisiert ist, wobei der Anteil des Säureanhydrids zwischen 0,2 und 4 Gew.-% bezogen auf das gesamte Blockcopolymer liegt.

7. Zusammensetzung gemäß einem der Ansprüche 1 bis 6, **dadurch gekennzeichnet, dass** als Alkylencopolymere gemäß Komponente B3) Ethylen/Propylen-Kautschuk oder Ethylen-octen-Copolymeren, funktionalisiert oder unfunktionalisiert verwendet wird.

8. Verwendung der Zusammensetzungen gemäß einem der Ansprüche 1 bis 7 zur Herstellung von Formkörpern.

9. Formkörper, enthaltend eine Zusammensetzung nach einem der Ansprüche 1 bis 8.

10. Formkörper aus einem hochwärmeformbeständiges Polycarbonat gemäß Anspruch 9, aufweisend eine Oberflächenbeschichtung aus einer Metallschicht.

11. Formkörper gemäß Anspruch 10, aufweisend eine Oberflächenbeschichtung aus einer Metallschicht mit einer Stärke von 20 - 500 nm.

12. Formkörper gemäß einem der Ansprüche 9 bis 11 **dadurch gekennzeichnet, dass** der Formkörper ein Teil eines Kraftfahrzeugs, Schienenfahrzeugs, Luftfahrzeugs oder Wasserfahrzeugs oder Folien, Profile oder Gehäuseteile jeder Art ist.

13. Mehrschichtiges Erzeugnis enthaltend eine Substratschicht, die mindestens auf einer Seite eine weitere Schicht aufweist, wobei die Substratschicht aus Zusammensetzungen nach einem der Ansprüche 1 bis 9 hergestellt wird.

14. Mehrschichtiges Erzeugnis nach Anspruch 13, **dadurch gekennzeichnet, dass** die Schicht auf der Substratschicht eine Metallschicht ist.

15. Mehrschichtiges Erzeugnis nach Anspruch 14, **dadurch gekennzeichnet, dass** auf der Metallschicht eine weitere Schutzschicht aufgetragen ist.

16. Verfahren zur Erzeugung eines mehrschichtiges Erzeugnisses nach Anspruch 15, **dadurch gekennzeichnet, dass** die Schutzschicht in einem PECVD oder Plasmapolymerisationsprozess aufgebracht werden.

17. Verfahren zur Erzeugung von Mehrschichtiges Erzeugnis nach Anspruch 16, **dadurch gekennzeichnet, dass** die Schutzschicht durch PECVD oder Plasmapolymerisationsprozess von einer oder mehrerer leichtflüchtigen Komponenten ausgewählt aus Hexamethyldisiloxan (HMDSO), Tetrametyldisiloxan, Decamethylcyclopentasiloxan, Octamethylcyclotetrasiloxan und Trimethoximethylsilan erfolgt.

## Claims

1. Compositions containing
A) 82-99.5 parts by weight (based on the sum of the parts by weight of Components A+B, Component B designating one or more of the components selected from B2 and B3) of polycarbonate having high heat distortion resistance and based on one or more cycloaliphatic bisphenols of the formula 1, 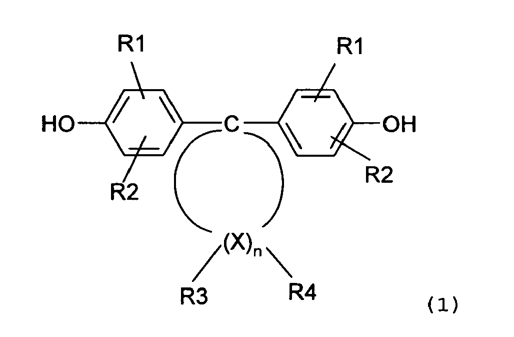 in which
R1 and R2, independently of one another, denote hydrogen, halogen, Cl-C8-alkyl, C5-C6-cycloalkyl, phenyl, C7-C12 aralkyl,
n denotes an integer from 4 to 7,
R3 and R4 are individually selectable for each X and, independently of one another, denote hydrogen or C1-C6-alkyl and
X denotes carbon,
with the proviso that R3 and R4 simultaneously denote alkyl on at least one atom X;
and
B) 0.5-18 parts by weight (based on the sum of the parts by weight of Components A+B, Component B designating one or more of the Components B2 and/or B3) of one or more polyolefins and/or polyolefin derivatives selected from:
B2) block copolymer based on vinylaromatics (A-blocks) and those predominantly formed by polymerization of 1,3 dienes (B-blocks),
it being possible for these block copolymers to be functionalized at least partly with acid anhydride groups,
B3) alkylene copolymers,
all stated parts by weight in the present application being standardized so that the sum of the parts by weight of Components A+B in the composition are 100.

2. Composition according to Claim 1, containing a polycarbonate having heat distortion resistance, according to Component A), in which R1 and R2, independently of one another, denote methyl, phenyl or H and in particular H.

3. Composition according to either of Claims 1 and 2, **characterized in that** the polycarbonate having high heat distortion resistance, according to Component A), is a copolycarbonate of bisphenol A and bisphenol TMC.

4. Composition according to any of Claims 1 to 3, containing 0 to 5 parts by weight (based on the sum of the parts by weight of Components A+B = 100) of additives as Component C).

5. Composition according to any of Claims 1 to 4, **characterized in that** the block copolymer according to Component B2) based on vinylaromatics (A-blocks), and those predominantly formed by polymerization of 1,3 dienes (B-blocks).

6. Composition according to any of Claims 1 to 5, **characterized in that** the block copolymer according to Component B2), in which at least some of the blocks are functionalized with acid anhydride groups, the proportion of the acid anhydride being between 0.2 and 4% by weight, based on the total block copolymer.

7. Composition according to any of Claims 1 to 6, **characterized in that** ethylene/propylene rubber or ethylene-octene copolymers, functionalized or unfunctionalized, is used as alkylene copolymers according to component B3).

8. Use of the compositions according to any of Claims 1 to 7 for production of mouldings.

9. Moulding comprising a composition according to any of Claims 1 to 8.

10. Moulding comprising a polycarbonate having high heat distortion resistance, according to Claim 9, having a surface coating comprising a metal layer.

11. Moulding according to Claim 10, having a surface coating comprising a metal layer having a thickness of 20-500 nm.

12. Moulding according to any of Claims 9 to 11, **characterized in that** the moulding is part of a motor vehicle, railway vehicle, aircraft or water vehicle or films, profiles or housing parts of any kind.

13. Multilayer product containing a substrate layer which has a further layer on at least one side, the substrate layer being produced from compositions according to any of Claims 1 to 9.

14. Multilayer product according to Claim 13, **characterized in that** the layer on the substrate layer is a metal layer.

15. Multilayer product according to Claim 14, **characterized in that** a further protective layer is applied to the metal layer.

16. Process for the production of a multilayer product according to Claim 15, **characterized in that** the protective layer is applied in a PECVD or plasma polymerization process.

17. Process for the production of a multilayer product according to Claim 16, **characterized in that** the protective layer is effected by PECVD or plasma polymerization process from one or more readily volatile components selected from hexamethyldisiloxane (HMDSO), tetramethyldisiloxane, decamethylcyclopentasiloxane, octamethylcyclotetrasiloxane and trimethoxymethylsilane.

## Revendications

1. Compositions contenant :
A) 82 à 99,5 parties en poids (par rapport à la somme des parties en poids des composants A+B, le composant B désignant un ou plusieurs des composants choisis parmi B2 et B3) d'un polycarbonate hautement résistant à la déformation sous l'effet de la chaleur à base d'un ou de plusieurs bisphénols cycloaliphatiques de formule I 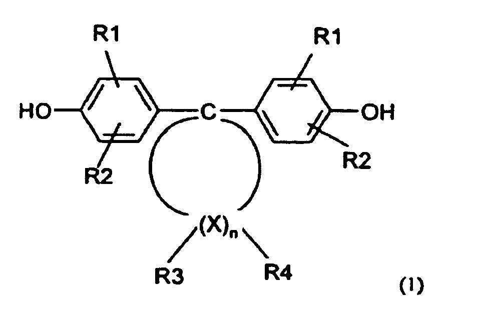 dans laquelle
R1 et R2 signifient indépendamment l'un de l'autre hydrogène, halogène, alkyle en C1-C8, cycloalkyle en C5-C6, phényle, aralkyle en C7-C12,
n signifie un nombre entier de 4 à 7,
R3 et R4 peuvent être choisis individuellement pour chaque X et signifient indépendamment l'un de l'autre hydrogène ou alkyle en C1-C6, et
X signifie carbone,
à condition que R3 et R4 signifient simultanément alkyle sur au moins un atome X ;
et
B) 0,5 à 18 parties en poids (par rapport à la somme des parties en poids des composants A+B, le composant B désignant un ou plusieurs des composants B2 et/ou B3) d'une ou de plusieurs polyoléfines et/ou d'un ou de plusieurs dérivés de polyoléfines choisis parmi :
B2) un copolymère séquencé à base de composés aromatiques de vinyle (séquences A) et de composés principalement formés par polymérisation de 1,3-diènes (séquences B),
ces copolymères séquencés pouvant être fonctionnalisés au moins en partie avec des groupes anhydride d'acide,
B3) des copolymères d'alkylène
toutes les données de parties en poids dans la présente demande étant normées de manière à ce que la somme des parties en poids des composants A+B dans la composition soit de 100.

2. Composition selon la revendication 1, contenant un polycarbonate hautement résistant à la déformation sous l'effet de la chaleur selon le composant A), R1 et R2 signifiant indépendamment l'un de l'autre méthyle, phényle ou H, et notamment H.

3. Composition selon l'une quelconque des revendications 1 et 2, **caractérisée en ce que** le polycarbonate hautement résistant à la déformation sous l'effet de la chaleur selon le composant A) est un copolycarbonate de bisphénol A et de bisphénol TMC.

4. Composition selon l'une quelconque des revendications 1 à 3, contenant 0 à 5 parties en poids (par rapport à la somme des parties en poids des composants A+B = 100) d'additifs en tant que composant C).

5. Composition selon l'une quelconque des revendications 1 à 4, **caractérisée en ce que** le copolymère séquencé selon le composant B2) à base de composés aromatiques de vinyle (séquences A) et de composés principalement formés par polymérisation de 1,3-diènes (séquences B).

6. Composition selon l'une quelconque des revendications 1 à 5, **caractérisée en ce que** dans le copolymère séquencé selon le composant B2), dont au moins une partie des séquences est fonctionnalisée avec des groupes anhydride d'acide, la proportion de l'anhydride d'acide étant comprise entre 0,2 et 4 % en poids, par rapport à l'ensemble du copolymère séquencé.

7. Composition selon l'une quelconque des revendications 1 à 6, **caractérisée en ce qu'**un caoutchouc éthylène/propylène ou des copolymères éthylène-octène, fonctionnalisés ou non fonctionnalisés, sont utilisés en tant que copolymères d'alkylène selon le composant B3).

8. Utilisation des compositions selon l'une quelconque des revendications 1 à 7 pour la fabrication de corps moulés.

9. Corps moulé, contenant une composition selon l'une quelconque des revendications 1 à 8.

10. Corps moulé en un polycarbonate hautement résistant à la déformation sous l'effet de la chaleur selon la revendication 9, comprenant un revêtement de surface en une couche métallique.

11. Corps moulé selon la revendication 10, comprenant un revêtement de surface en une couche métallique d'une épaisseur de 20 à 500 nm.

12. Corps moulé selon l'une quelconque des revendications 9 à 11, **caractérisé en ce que** le corps moulé fait partie d'un véhicule automobile, d'un véhicule ferroviaire, d'un avion ou d'un bateau, ou de feuilles, de profilés ou de parties de boîtiers d'un type quelconque.

13. Article multicouche contenant une couche de substrat, qui comprend une couche supplémentaire sur au moins un côté, la couche de substrat étant fabriquée en compositions selon l'une quelconque des revendications 1 à 9.

14. Article multicouche selon la revendication 13, **caractérisé en ce que** la couche sur la couche de substrat est une couche métallique.

15. Article multicouche selon la revendication 14, **caractérisé en ce qu'**une couche de protection supplémentaire est appliquée sur la couche métallique.

16. Procédé de formation d'un article multicouche selon la revendication 15, **caractérisé en ce que** la couche de protection est appliquée par un procédé PECVD ou de polymérisation plasma.

17. Procédé de formation d'un article multicouche selon la revendication 16, **caractérisé en ce que** la couche de protection est réalisée par un procédé PECVD ou de polymérisation plasma d'un ou de plusieurs composants volatils choisis parmi l'hexaméthyldisiloxane (HMDSO), le tétraméthyldisiloxane, le décaméthylcyclopentasiloxane, l'octaméthylcyclotétrasiloxane et le triméthoxyméthylsilane.
